# EUROPÄISCHE PATENTSCHRIFT

(11) **EP 1 529 175 B1**
(45) Veröffentlichungstag und Bekanntmachung des Hinweises auf die Patenterteilung: **27.07.2011**
(21) Anmeldenummer: 03766341.6
(22) Anmeldetag: 29.07.2003
(51) Int. Cl.: F15B 7/08

(54) **Hauptzylinder**
Master cylinder
Maître-cylindre

(30) Priorität: 30.07.2002 DE 10234542
(43) Veröffentlichungstag der Anmeldung: 11.05.2005
(73) Patentinhaber: Continental Teves AG & Co. oHG, 60488 Frankfurt am Main (DE)
(72) Erfinder: DROTT, Peter, 65936 Frankfurt/M (DE); KÖNIG, Harald, 61239 Ober-Mörlen (DE); JUNGMANN, Udo, 64546 Mörfelden (DE); BISCHOFF, Andreas, 61118 Bad Vilbel (DE); KOPPEL, Hans-Michael, 65931 Frankfurt/M (DE)
(86) Internationale Anmeldenummer: PCT/EP2003/008363
(87) Internationale Veröffentlichungsnummer: WO 2004/013521

(56) Entgegenhaltungen:
- DE-A- 3 607 254
- DE-A- 3 607 254
- DE-A- 4 223 671
- DE-C- 884 260
- US-A- 2 660 493
- US-A- 2 660 493
- US-A- 5 328 178

## Beschreibung

Die vorliegende Erfindung betrifft einen Hauptzylinder gemäß dem Oberbegriff des Anspruchs 1.

Aus der EP 0 889 265 A1 ist eine Kolbendichtung bekannt, die eine innere Dichtlippe und eine äußere Dichtlippe aufweist, wobei die innere Dichtlippe dynamisch beansprucht ist, während die äußere Dichtlippe statisch beansprucht wird. Das äußere Ende der äußeren Dichtlippe ragt in axialer Richtung über das äußere Ende der inneren Dichtlippe hervor. Die bekannte Dichtmanschette wird durch einen der Stützung dienenden Wulst verstärkt, welcher in radialer Richtung an dem Kolben angreift.

Aus der DE 198 12 041 A1 ist ein Dichtelement zur Abdichtung von zwei koaxialen gegeneinander axial verschiebbaren Flächen bekannt. Diese Dichtmanschette besitzt eine äußere und eine innere Dichtlippe, die an den zu dichtenden Flächen radial anliegen. Um die Kraft zu erhöhen, mit der die Dichtlippen an den Flächen anliegen, sind die Dichtlippen durch radiale Stege miteinander verbundenen.

Um die Dichtwirkung zu erhöhen ist es vielfach erwünscht, die Dichtlippen-Enden hinreichend elastisch zu machen, da hierdurch die Reibung verringert und die Dichtwirkung erhöht werden kann. Das bedeutet, dass man die Dichtlippen relativ lang und schmal ausführt. Da aber die innere Dichtlippe mit ihrem freien Ende in den Bereich der Grenzfläche zwischen dem Zylinder und dem Kolben reicht und diese Grenzflächen sich gegeneinander bewegen, besteht die Gefahr, dass das Ende der Dichtlippe in den Spalt zwischen Zylinder und Kolben eingeklemmt wird. Das kann insbesondere dann geschehen, wenn ein erhebliches Druckgefälle zwischen der Rückseite der Dichtmanschette und der den Dichtlippen zugeordneten Seiten der Dichtmanschette besteht.

Eine Abhilfe lässt sich schaffen, wenn man die nur statisch beanspruchte Dichtlippe, die sich am Boden der Nut zur Aufnahme der Dichtmanschette befindet, relativ steif ausführt und darüber hinaus das Ende dieser Dichtlippe axial über das Ende der dynamisch beanspruchten Dichtlippe vorspringenden lässt. Es ergibt sich eine ähnliche Konstruktion, wie sie in der oben genannten europäischen Patentschrift abgebildet ist. Nachteilig hierbei ist allerdings, dass eine derartige steife Dichtlippe weniger gut dichtet und sich nicht leicht montieren lässt.

Aus der DE 36 07 254 A1 ist ein gattungsgemäßer Hauptzylinder bekannt. Dieser weist eine becherförmige Gummidichtung mit einer dynamisch beaufschlagten Dichtlippe und einer statisch beaufschlagten Dichtlippe als Primärdichtung auf, welche an einer Seite des Primärkolben befestigt ist, wobei die statisch beaufschlagte Dichtlippe der Gummidichtung an dem Primärkolben anliegt und die dynamisch beaufschlagte Dichtlippe an dem Zylinder angreift.

Aufgabe der Erfindung ist es daher, einen Hauptzylinder derart auszugestalten, dass beide Dichtlippen der Primärmanschette, hierin auch Dichtmanschette genannt, sehr elastisch ausgeführt werden können, wobei gleichzeitig noch verhindert werden soll, dass die dynamisch belastete Dichtlippe in den Spalt zwischen den beiden zu dichtenden Flächen eingeklemmt werden kann und/oder die statisch belastete Dichtlippe durch Anschlagen verformt werden kann und damit in ihrer Wirkung behindert wird.

Die Aufgabe wird dadurch gelöst, dass die Primärmanschette im wesentlichen in einer, in den Zylinder eingefügten Nut aufgenommen ist und die erste, dynamisch beaufschlagte Dichtlippe an dem Kolben angreift und die zweite, statisch beaufschlagte Dichtlippe an einem Boden der Nut anliegt, wobei die Primärmanschette mit einem parallel zu den Dichtlippen umlaufenden Ansatz versehen ist, welcher radial zwischen der ersten Dichtlippe und der zweiten Dichtlippe angeordnet ist und welcher in axialer Richtung über die Dichtlippen vorsteht.. Durch den Ansatz ist sichergestellt, dass die Enden der Dichtlippen nicht an der radial verlaufenden Wand der Nut anschlagen können und es wird weiterhin verhindert, dass die dynamisch beaufschlagte Dichtlippe in den Spalt zwischen den abzudichtenden Flächen gelangen kann. Das geschieht dadurch, dass der Ansatz an der Wand der Nut anschlägt und somit die Enden der Dichtlippen im Abstand zu dieser Wand und damit auch zu dem Spalt hält.

Um mit Sicherheit zu verhindern, dass die Dichtlippen und/oder der Ansatz zwischen den Wänden der Nut eingeklemmt wird und damit die Funktionsfähigkeit der Dichtmanschette behindert wird, ist vorzugsweise die Breite der Nut größer ist als die lichte Breite der Dichtmanschette.

Ein besonderer Vorteil der Erfindung liegt darin, dass die statisch beaufschlagte Dichtlippe sehr elastisch ausgestaltet werden kann, da sie von der Aufgabe befreit ist, die dynamisch beaufschlagte Dichtlippe von dem Spalt zwischen den abzudichtenden Flächen auf Abstand zuhalten. Die zweite Dichtlippe ist deshalb vorzugsweise derart ausgestaltet, dass sie von Druckmittel überströmt werden kann und damit die Wirkung eines Ventils zeigt. Hinsichtlich der dynamisch beanspruchten Dichtlippe ist dies nur bedingt möglich, da diese Dichtlippe relativ robust ausgestaltet werden muss.

Um den Ansatz hinreichend steif zu halten, ist die Stärke des Ansatzes als Differenz seines inneren und äußeren Durchmesser mindestens ebenso groß wie die Stärke jeder der Dichtlippen. Hierdurch wird auch der Rücken der Dichtmanschette vergleichsweise fest, so dass die Dichtlippen die notwendige radiale Vorspannung aufbringen können.

Wie weiter oben schon erläutert, ist die erfindungsgemäße Dichtmanschette besonders dafür geeignet, dass sie nicht nur einen unter Druck stehenden Raum abdichtet, sondern sie ist gleichzeitig auch in der Lage, bei Umkehr der Richtung des Druckes als Ventil zu wirken. Da aber während des Überströmens die Stirnfläche des Ansatzes an der radialen Nutwand anliegt, ist gemäß einer vorteilhaften Weiterbildung der Erfindung der Endbereich am freien Ende des Ansatzes mit radialen Durchbrüchen versehen, die einen Durchtritt des Druckmittels in radialer Richtung gestatten. Auf diese Weise lässt sich erreichen, dass das im wesentlichen über die statisch beanspruchte Dichtlippe strömende Druckmittel im Bereich der Nutwand radial nach innen abfließen kann. Diese Durchbrüche können beispielsweise radial verlaufende Bohrungen durch den Ansatz sein.

Eine Vereinfachung der Fertigung der Dichtmanschette lässt sich dadurch erreichen, dass die Durchbrüche in dem Ansatz in axialer Richtung zum freien Ende des Ansatzes hin offen sind. Der weiter oben als umlaufend angegebene Ansatz zerfällt dann in einzelne, auf einem umlaufenden Kreis vorzugsweise im gleichen Abstand stehende Ansätze, die sich mit ihrem freien Enden an der Nutwand abstützen. Üblicherweise werden die mit einer Dichtmanschette verbundenen Stützkörper aus einem gegenüber der Dichtmanschette steiferen Werkstoff gebildet.

Man erhält allerdings einen besonders kostengünstigen Aufbau, wenn der Ansatz einstückig mit der Dichtmanschette verbunden ist und bevorzugt aus dem gleichen Werkstoff besteht, da hier die Manschette durch einen einzigen Guss-Vorgang ohne Verbindung zweier Teile hergestellt werden kann.

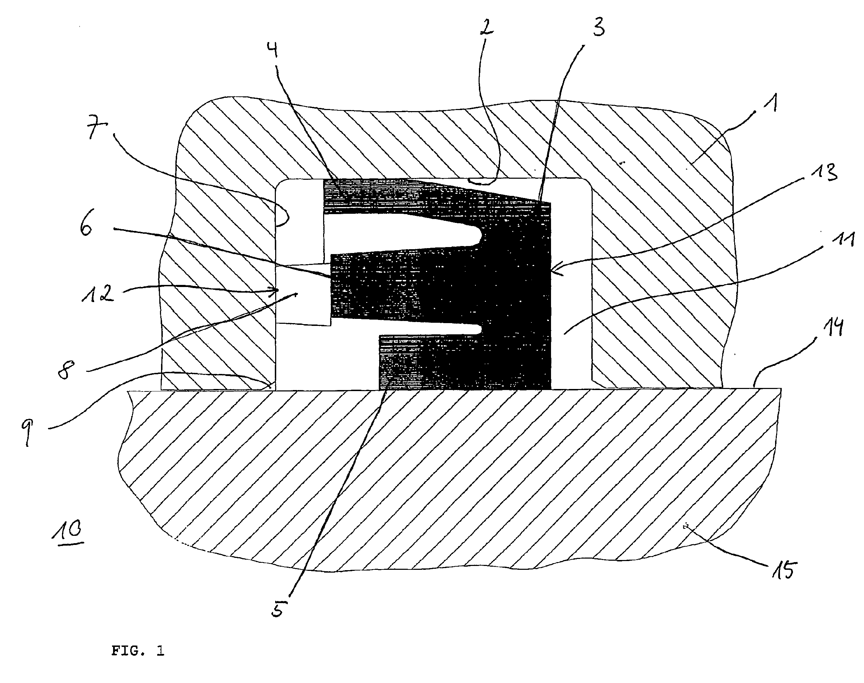

Ein Ausführungsbeispiel der Erfindung wird nachfolgend anhand der Zeichnung erläutert.

In der Zeichnung ist herausgebrochen und geschnitten ein Ausschnitt aus dem Gehäuse eines Zylinders 1 einer ZylinderKolben-Einheit 1,15 dargestellt, welches in einer Nut 2 eine Dichtmanschette 3 aufnimmt. Die Dichtmanschette 3 besitzt eine äußere, radial außen liegende Dichtlippe 4 und eine innere, radial innen liegende Dichtlippe 5. Die äußere Dichtlippe 4 ist statisch beansprucht und ist nur geringfügig in der Nut 2 seitlich bewegbar. Dagegen wird eine Mantelfläche 14 des herausgebrochen dargestellten Kolbens 15 gegenüber der inneren Dichtlippe 5 verschiebbar. Radial zwischen der inneren Dichtlippe 5 und der äußeren Dichtlippe 4 ist ein Ansatz 6 angeordnet, der mit einer Stirnfläche 12 seines freien Endes an einer Wand 7 der Nut 2 anliegt und die beiden radial versetzt liegenden Dichtlippen 4,5 im Abstand zu der Wand 7 hält. Das freie Ende des Ansatzes 6 ist mit radialen Durchbrüchen 8 versehen, durch welche Druckmittel entlang der Wand 7 radial nach innen zu einem, zwischen dem Gehäuse des Zylinders 1 und der Mantelfläche 14 des Kolbens 15 ausgebildeten Spalt 9 fließen kann. Bei einer entsprechenden Verschiebung des Kolbens 15 kann das Druckmittel von der Wand 7 in einen, hinter dem Kolben 15 liegenden Raum 10 abfließen. Ein Überströmen der Dichtlippe 4 ist dann möglich, wenn der Druck in einem Bereich 11 der Nut 2, welcher sich auf einer Rückseite 13 der Dichtmanschette 3 befindet, größer ist als in dem Bereich der Wand 7.

Die Erfindung lässt sich kurz wie folgt beschreiben:
Gesucht wurde nach einer Möglichkeit, bei einem Hauptzylinder beispielsweise in Plunger-Bauweise mit feststehenden Dichtelementen und eintauchenden Kolben das axiale Anschlagen der Dichtlippenstirnseiten von den Dichtmanschetten 3, den sogenannten Primärmanschetten, an der Nut-Wand 7 zu unterbinden.
Dieses Anschlagen der Dichtlippen 4,5 wird durch das erfindungsgemäße Manschettenprofil vollständig vermieden.
Zusätzlich ist zwischen den beiden, sich in axialer Richtung erstreckenden Dichtlippen 4,5 das Manschettenprofil mit einem als Stützrippe ausgebildeten Ansatz 6 ausgebildet, welcher sowohl die innere Dichtlippe 5 wie auch die äußere Dichtlippe 4 in ihren axialen Längen deutlich überragt. An dem freien Ende dieser Stützrippe 6 befinden sich gleichmäßig am Umfang verteilte Durchbrüche 8, welche ein ungewolltes Abdichten zwischen Stützrippe 6 und Wand 7 der Nut 2 vermeiden sollen, sowie für einen ausreichend hohen Durchflussquerschnitt sorgen.

Es ist bekannt, die Primärmanschette 3 eines Hauptzylinders wahlweise an der inneren Dichtlippe 5 oder äußeren Dichtlippe 4 abzustützen bzw. anschlagen zu lassen. Dies erschwert oder verhindert eine korrekte Dichtlippenfunktion. Insbesondere das Überströmen der äußeren Dichtlippe 4 mit Druckmittel bei einem geringen Umklappdruck ist bei stirnseitiger Anlage der äußeren Dichtlippe 4 kaum möglich, da die Dichtlippe 4 nicht frei beweglich ist. Dieses Überströmen der äußeren Dichtlippe 4 ist aber zum Zwecke des Volumenausgleichs eine zwingend erforderliche Funktion einer Primärmanschette 3.

Die Vorteile der integrierten, mittleren Stützrippe 6 in der Primärmanschette 3 sind eine verbesserte Dichtlippenfunktion sowie ein geringerer Umklappdruck der äußeren Dichtlippe 4 speziell im Fall des Volumenausgleichs.

### Bezugszeichen

- 1: Zylinder
- 2: Nut
- 3: Dichtmanschette
- 4: Dichlippe
- 5: Dichtlippe
- 6: Ansatz
- 7: Wand
- 8: Durchbruch
- 9: Spalt
- 10: Raum
- 11: Bereich
- 12: Stirnfläche
- 13: Rückseite
- 14: Mantelfläche
- 15: Kolben

## Patentansprüche

1. Hauptzylinder mit einem Zylinder (1), wenigstens einem Kolben (15) und einer Primärmanschette (3), wobei die Primärmanschette (3) mit einer ersten und einer zweiten Dichtlippe (4, 5) versehen ist und Druckmittel die zweite Dichtlippe (4) zum Zwecke des Volumenausgleichs überströmen kann, **dadurch gekennzeichnet, dass** die Primärmanschette (3) im wesentlichen in einer, in den Zylinder (1) eingefügten Nut (2) aufgenommen ist und die erste, dynamisch beaufschlagte Dichtlippe (5) an dem Kolben (15) angreift und die zweite, statisch beaufschlagte Dichtlippe (4) an einem Boden der Nut (2) anliegt, wobei die Primärmanschette mit einem parallel zu den Dichtlippen (4, 5) umlaufenden Ansatz (6) versehen ist, welcher radial zwischen der ersten Dichtlippe (5) und der zweiten Dichtlippe (4) angeordnet ist und welcher in axialer Richtung über die Dichtlippen (4,5) vorsteht.

2. Hauptzylinder nach Anspruch 1, **dadurch gekennzeichnet, dass** die Breite der Nut (2) größer ist als die lichte Breite der Primärmanschette (3).

3. Hauptzylinder nach Anspruch 1, **dadurch gekennzeichnet, dass** die Stärke des Ansatzes (6) als Differenz seines inneren und äußeren Durchmesser mindestens ebenso groß ist wie die Stärke jeder der Dichtlippen (4,5).

4. Hauptzylinder nach Anspruch 1, **dadurch gekennzeichnet, dass** der Endbereich am freien Ende des Ansatzes (6) mit radialen Durchbrüchen versehen ist, die einen Durchtritt des Druckmittels in radialer Richtung gestatten.

5. Hauptzylinder nach Anspruch 4, **dadurch gekennzeichnet, dass** die Durchbrüche in axialer Richtung zum freien Ende des Ansatzes hin offen sind.

6. Hauptzylinder nach Anspruch 1, **dadurch gekennzeichnet, dass** der Ansatz (6) einstückig mit der Primärmanschette (3) verbunden ist und bevorzugt aus dem gleichen Werkstoff besteht.

## Claims

1. Master cylinder having a cylinder (1), at least one piston (15) and a primary collar (3), the primary collar (3) being provided with a first and a second sealing lip (4, 5) and it being possible for pressure medium to flow across the second sealing lip (4) for the purpose of volume equalization, **characterized in that** the primary collar (3) is received substantially in a groove (2) which is introduced into the cylinder (1), and the first, dynamically loaded sealing lip (5) acts on the piston (15) and the second, statically loaded sealing lip (4) bears against a bottom of the groove (2), the primary collar being provided with an attachment (6) which runs around parallel to the sealing lips (4, 5), is arranged radially between the first sealing lip (5) and the second sealing lip (4), and which projects beyond the sealing lips (4, 5) in the axial direction.

2. Master cylinder according to Claim 1, **characterized in that** the width of the groove (2) is greater than the inside width of the primary collar (3).

3. Master cylinder according to Claim 1, **characterized in that** the thickness of the attachment (6), as the difference between its internal and external diameters, is at least just as great as the thickness of each of the sealing lips (4, 5).

4. Master cylinder according to Claim 1, **characterized in that** the end region at the free end of the attachment (6) is provided with radial apertures which permit a passage of the pressure medium in the radial direction.

5. Master cylinder according to Claim 4, **characterized in that** the apertures are open in the axial direction towards the free end of the attachment.

6. Master cylinder according to Claim 1, **characterized in that** the attachment (6) is connected integrally to the primary collar (3) and is preferably composed of the same material.

## Revendications

1. Maître-cylindre comprenant un cylindre (1), au moins un piston (15) et une manchette primaire (3), la manchette primaire (3) étant pourvue d'une première et d'une deuxième lèvre d'étanchéité (4, 5), et un fluide sous pression pouvant circuler par-dessus la deuxième lèvre d'étanchéité (4) en vue de compenser le volume, **caractérisé en ce que** la manchette primaire (3) est reçue essentiellement dans une rainure (2) pratiquée dans le cylindre (1), et la première lèvre d'étanchéité (5) sollicitée dynamiquement vient en prise sur le piston (15) et la deuxième lèvre d'étanchéité (4) sollicitée statiquement s'applique contre un fond de la rainure (2), la manchette primaire étant pourvue d'une avancée périphérique (6) parallèle aux lèvres d'étanchéité (4, 5), qui est disposée radialement entre la première lèvre d'étanchéité (5) et la deuxième lèvre d'étanchéité (4) et qui fait saillie dans la direction axiale au-delà des lèvres d'étanchéité (4, 5).

2. Maître-cylindre selon la revendication 1, **caractérisé en ce que** la largeur de la rainure (2) est supérieure à la largeur intérieure de la manchette primaire (3).

3. Maître-cylindre selon la revendication 1, **caractérisé en ce que** l'épaisseur de l'avancée (6) calculée comme la différence entre son diamètre intérieur et son diamètre extérieur est au moins égale à l'épaisseur de chacune des lèvres d'étanchéité (4, 5).

4. Maître-cylindre selon la revendication 1, **caractérisé en ce que** la région d'extrémité à l'extrémité libre de l'avancée (6) est pourvue d'orifices radiaux qui permettent un passage du fluide sous pression dans la direction radiale.

5. Maître-cylindre selon la revendication 4, **caractérisé en ce que** les orifices sont ouverts dans la direction axiale vers l'extrémité libre de l'avancée.

6. Maître-cylindre selon la revendication 1, **caractérisé en ce que** l'avancée (6) est connectée d'une seule pièce à la manchette primaire (3) et se compose de préférence du même matériau.
